# EUROPEAN PATENT APPLICATION

(11) **EP 3 346 430 A1**
(43) Date of publication of application: **11.07.2018**
(21) Application number: 17150595.1
(22) Date of filing: 07.01.2017
(51) Int. Cl.: G06Q 10/00

(54) **MAIL TRACKING**

(71) Applicant: CGI Danmark A/S, 2750 Bailerup (DK)
(72) Inventor: Probst, Thomas, 2300 Copenhagen S (DK)
(74) Representative: Plougmann Vingtoft a/s

(57) **Abstract**

The present invention provides, among other aspects, a trackable item comprising: a product, a first electronic tag attached to the product, a second electronic tag having a first tag part attached to a first part of the product or to the first electronic tag, and having a second tag part attached to a second part of the product, the first and second tag parts being mechanically attached to one another at least by a first mechanical connection, whereby the first part of the product and the second part of the product are attached to one another, the second electronic tag being configured to be rendered unreadable when the first mechanical connection between the first tag part of the second electronic tag and second tag part of the second electronic tag is broken.

## Description

### Technical field

The present invention relates to trackable items and tracking thereof.

### Background of the invention

Advertisers that mail advertisements to potential consumers are generally interested in creating as much sales as possible for the least amount of mailed advertisements. Mailing advertisements to individuals who are unlikely to read the advertisement is undesirable.

Another problem, one faced by many companies, is that when payment reminders are sent to late payers, surprisingly often the late payers claim to not have received the payment reminder. This is currently impossible to prove. Having an indication that the payment reminder has been opened would be very valuable for companies facing this common problem.

### Summary of the invention

A first aspect of the invention provides a trackable item comprising:
- a product,
- a first electronic tag attached to the product,
- a second electronic tag having a first tag part attached to a first part of the product or to the first electronic tag, and having a second tag part attached to a second part of the product, the first and second tag parts being mechanically attached to one another at least by a first mechanical connection, whereby the first part of the product and the second part of the product are attached to one another, the second electronic tag being configured to be rendered unreadable when the first mechanical connection between the first tag part of the second electronic tag and second tag part of the second electronic tag is broken.

In some embodiments, a force required to break the mechanical connection in the second electronic tag is less than 1 N. In some embodiments, the force is less than 0.5 N, such as less than 0.1 N, such as less than 0.05 N.

Generally, the first and second electronic tags are RFID (radio frequency identification) tags. It is well known that "RFID" generally covers a range of different technologies all of which involve identification via radio frequency signals. Different RFID technologies use different RF frequencies and have different physical ranges.

RFID tags comprise a system of an antenna and a microchip connected to the antenna. Electric current generated in the antenna is provided to the microchip, whereby the microchip receives information. In some cases, the chip itself is powered only by the current generated by the antenna (passive tag), as opposed to being powered by a battery in the tag (active tag). In some embodiments, the first tag part comprises a microchip, and the second tag part comprises an antenna attached to the microchip at least by a first conductor segment, the first conductor segment having a first end connected to the antenna and a second end connected to the microchip, the first conductor segment being configured to detach either at the first end or at the second end or in between the first and the second end at a tension in the first conductor segment less than 0.1 N. A defective antenna or microchip or a defective connection between the antenna and the microchip all render an RFID tag unreadable. In some embodiments, the rendering unreadable due to the detaching occurs when the tension is less than 0.05 N. Of course, the first conductor segment is at least a part of the first mechanical connection that attaches the first tag part to the second tag part before the first mechanical connection is broken.

In some embodiments, the product comprises an envelope, and the second electronic tag is attached to the envelope in such a way that the second electronic tag is rendered unreadable when the envelope is forcibly opened.

In some embodiments, the product includes a document comprising two pages, and the second electronic tag is arranged between the two pages, the first part of the second electronic tag being attached to a first page of the two pages, the second part of the second electronic tag being attached to a second page of the two pages, whereby the two pages are held together.

A second aspect provides a method for estimating whether a product in a trackable item has been opened, the trackable item comprising a first and a second electronic tag each having a corresponding tag ID, the method comprising:
- reading a plurality of electronic tags using a system of one or more electronic tag readers,
- recording in an electronic tag main database, for each read electronic tag, an indication that said each electronic tag has been read by the system of electronic tag readers,
- determining whether or not both the first and the second electronic tag have been read by the system of electronic tag readers by determining whether or not the electronic tag database comprises indications that the first and the second electronic tag have been read by the system of electronic tag readers.

In some embodiments, the indication is recorded in the database by storing respective IDs of the read electronic tags.

In some embodiments, the determining comprises determining whether or not the ID of both the first and the second electronic tag are present in the database.

In some embodiments, at least one of the one or more electronic tag readers is attached to a garbage bin or a recycling bin.

In some embodiments, at least one of the one or more electronic tag readers is attached to a vehicle, such as a garbage truck.

In some embodiments, information about the read electronic tags is transmitted to the database using a wireless communication system.

A third aspect of the invention provides a method for producing a trackable item, comprising:
- providing a product,
- attaching the first electronic tag to the product,
- attaching a second electronic tag to the product by attaching a first tag part of the second electronic tag to a first part of the product and attaching a second tag part of the second electronic tag to a second part of the product.

In some embodiments, the trackable item comprises a folded product, and the first tag part is attached to a first part of the folded product and the second tag part is attached to a second part of the folded product such that at least a part of an information contained in the folded product is not visible unless the first and second part of the second electronic tag are separated.

In some embodiments, the trackable item includes a leaflet comprising two pages, and the second electronic tag is arranged between the two pages and is attached to each of the two pages, whereby the two pages are held together, and the second electronic tag is configured to be rendered unreadable when the two pages are forcibly separated at the second electronic tag.

In some embodiments, the trackable item comprises an envelope, and the second electronic tag is attached to the envelope in such a way that the second electronic tag is rendered unreadable when the envelope is forcibly opened or an item inside the envelope is removed from the envelope.

In some embodiments, information about read electronic tags is stored in a database on a garbage truck, and data in the database on the garbage truck is subsequently transferred to the main database.

A fourth aspect provides an RFID tag comprising:
- a first electronic tag,
- a second electronic tag having a first tag part and a second tag part, the first and second tag parts being mechanically attached to one another at least by a first mechanical connection, the second electronic tag being configured to be rendered unreadable when the first mechanical connection between the first tag part of the second electronic tag and second tag part of the second electronic tag is broken, wherein a force required to break the mechanical connection in the second electronic tag is less than 1 N.

In some embodiments, the first and second electronic tags are rigidly attached to one another, such as by monolithic integration.

### Brief descriptions of the drawings

Figure 1 schematically illustrates a flyer in an open condition.
Figure 2 schematically illustrates the flyer shown in Figure 1, having a first and a second electronic tag attached.
Figure 3 schematically illustrates the flyer with tags shown in Figure 2, in a closed condition.
Figure 4 schematically illustrates a method for providing the trackable item shown in Figure 3.
Figure 5 illustrates a method for determining if an advertisement is likely to have been read by a consumer.
Figure 6 schematically illustrates a side of an RFID tag for use in selected embodiments of the present invention.
Figure 7 schematically illustrates a flip side of the RFID tag illustrated in Figure 6.
Figure 8 schematically illustrates an envelope comprising a first and a second RFID tag, before the envelope is closed.
Figure 9 schematically illustrates the envelope shown in Figure 8, now in a closed condition.
Figure 10 schematically illustrates the envelope shown in Figures 8 and 9 after being reopened.
Figure 11 illustrates an example of the second electronic tag being rendered unreadable after opening of the envelope as illustrated in Figure 10.
Figure 12 illustrates an RFID tag in accordance with an embodiment of the invention.

### Detailed description of selected embodiments

The invention will now be exemplified with reference to the accompanying drawings. Reference signs in this specification, including the claims, are not to be construed as limiting the scope of the invention. The drawings are not necessarily drawn to scale.

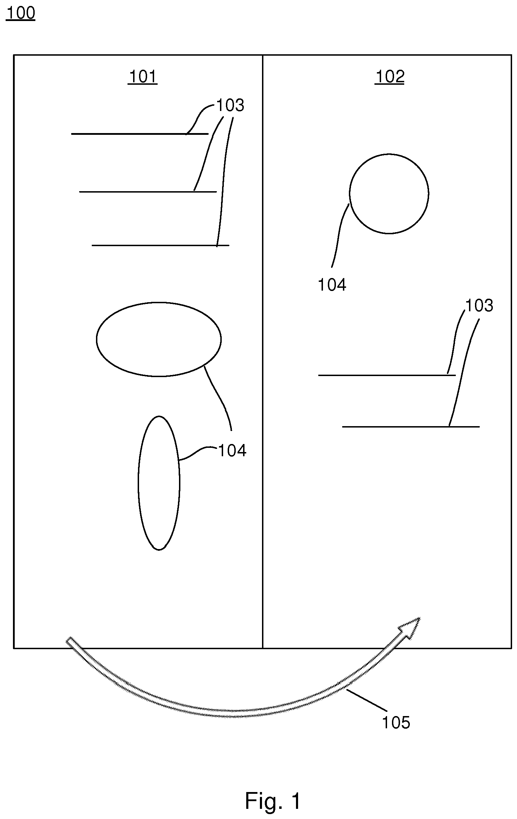

Fig. 1 illustrates a foldable flyer 100 in an open condition having a first (e.g. left) page 101 and a second (e.g. right page) 102. In this example, the left and right pages contain printed visual matter including text 103 (such as pricing information or product descriptions) and images 104 (for instance of the products described by the text 103). The flyer can be folded to be in a closed condition. This is done by folding the left page 101 onto the right page 102 as illustrated by arrow 105.

A product can consist of more than one part. The first tag may therefore be placed on one product item while the second tag is placed on another product item.

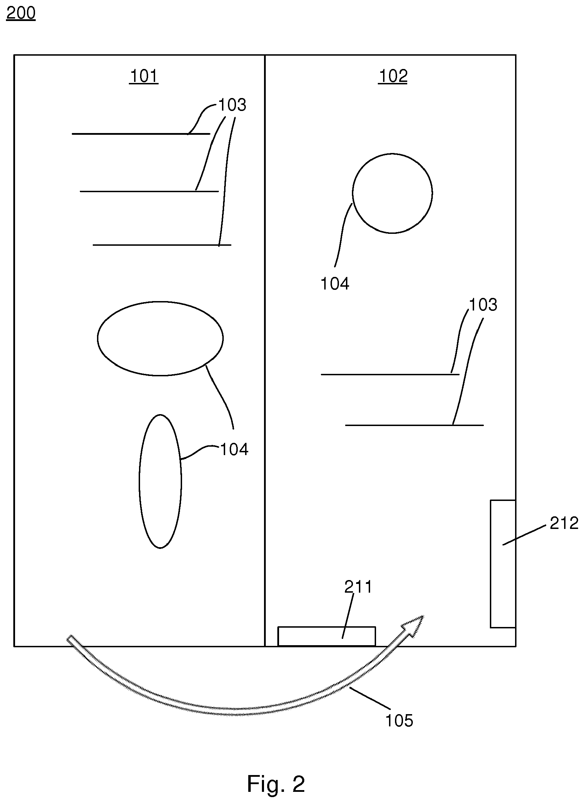

Fig. 2 illustrates the foldable flyer with two attached electronic tags. It includes a first electronic tag 211 and a second electronic tag 212, attached to either of the pages 101 and 102. In this example, both tags 211, 212 are attached to the right page. The first tag and/or the second tag might instead initially be attached to the left page instead. This is not essential to the invention.

In the present example, the tags are RFID tags.

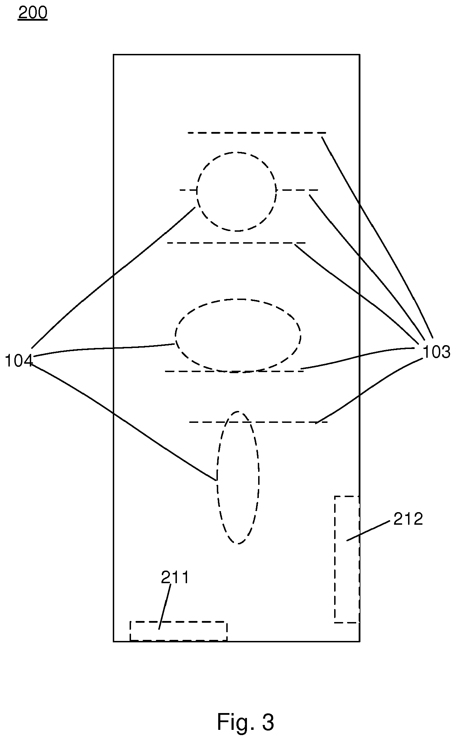

Fig. 3 shows the foldable flyer in a closed condition. The foldable flyer is now a mailing-ready trackable item. The left page 101 and right page 102 have been brought together, in this case by folding. The second tag 212 sticks to both pages 101 and 102 in the closed condition. Therefore, the two pages 101 and 102 will be partially held together by the second tag 212. The first tag is preferably not sticky, as this would make it unnecessarily more difficult to subsequently separate the pages, even if just slightly. Nevertheless, a sticky first tag 211 may be used.

The second tag 212 is constructed in such a way that when the flyer 200 is opened after having been closed into the closed condition, the second tag's electrical circuit will be damaged, making the second tag unreadable. Typically, an RFID tag has a microchip with an antenna attached thereto. One way of making the second tag unreadable is to use a circuit configured in such a way that the antenna is in a first part of the tag, and the microchip is in a second part of the tag, with the first and second part being held together by a relatively weak mechanical connection, part of which includes the connection between the first part of the tag and the second part of the tag. When the first part is pulled from the second part, the mechanical connection, and therefore the connection between the antenna and the microchip, will be damaged, making the tag unreadable. In the present example, the first part, containing the antenna, might be firmly attached to the first page 101 in the closed condition of the flyer, and the second part, containing the microchip, might be firmly attached to the second page 102. When the flyer is opened, the first and second part will be pulled apart, severing the connection between the antenna and the microchip, making the tag unreadable. The first tag, however, remains readable.

In one use case, a wrapper contains a first electronic tag that follows the wrapper and remains readable. The wrapper may contain a number of flyers, for instance five different flyers each having its own second electronic tag having its own ID. If the first and third flyer are read, their corresponding second electronic tags are rendered unreadable. The second electronic tags in the second, fourth and fifth flyers are intact and are therefore readable. When the wrapper and flyers are interrogated, the first electronic tag attached to the wrapper, as well as the second, fourth and fifth second electronic tags, will be read. It may be estimated that the recipient has recycled the wrapper and flyers (because the first electronic tag was read), and that the first and third flyers have been read (since the corresponding second electronic tags could not be read). If all flyers have been read (and their respective second electronic tags therefore been rendered unreadable), a reading of the wrapper tag at a recycling bin provides the only indication that the flyers may also have been recycled. Accordingly, it may be inferred (although not with certainty) that the flyers contained in the wrapper have been read. Depending on the requirements, the conclusion as to whether the flyers have been read can be drawn later, for instance a week after the wrapper has been recycled (read by the system of tag readers). This allows for taking into account that wrappers and flyers are not always recycled at the exact same time.

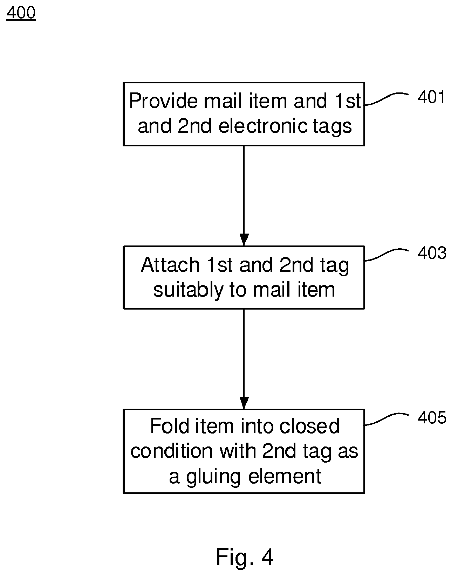

Fig. 4 illustrates a method for providing the trackable item shown in Figs. 2 and 3. First, the product, in this case a flyer, is provided together with a first and a second RFID tag, step 401. Next, in step 403, the first tag is attached to the flyer somewhere. This could for instance be on page 102 as shown in Fig. 2. Also in step 403, the second RFID tag is attached to a first part of the flyer, such as on page 102 as shown in Fig. 2. The second RFID tag is furthermore attached to a second part of the flyer, such as to page 101 as shown in Fig. 2, for instance by folding, step 405. The second tag is of the type described above. Accordingly, when the first part of the flyer and the second part of the flyer are pulled from one another, the second RFID tag becomes unreadable.

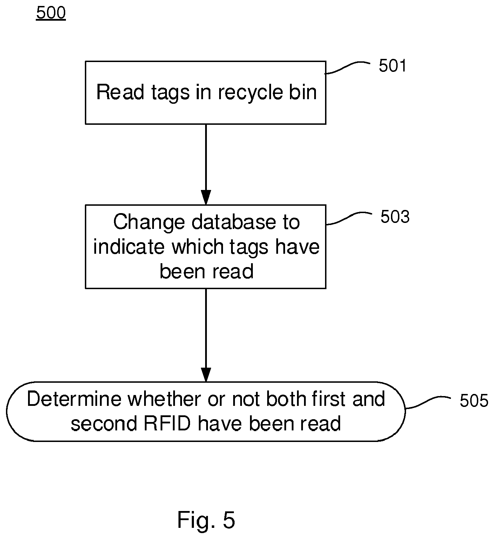

Fig. 5 illustrates a method in accordance with an embodiment of the invention. A system of one or more RFID tag readers reads, illustrated by step 501, compatible readable RFID tags in the vicinity of the readers in the system. The reader may for instance be located on a recycle bin or garbage truck collecting trash. If trackable items described in this specification are present in the trash collected in the truck, the RFID reader on the truck will read the compatible tags that at the same time are readable. RFIDs read by the reader are sent to a computer system for further analysis. Such a computer system preferably maintains a database comprising information about the RFID tags applied to products. In order to track advertisements, the database may contain information about IDs of RFID tags that have been attached to the advertisements.

If an RFID tag ID is received by the computer system from the reader, the database is modified to indicate so, as illustrate by step 503. For instance, a "db_READ" field may be changed from "FALSE" (indicating that the tag has not been read) to "TRUE" (indicating that the tag has been read) or a bit be changed from "0" (not read) to a "1" (read). A person skilled in the art will readily realize that the indication that a tag has been read can be made in many different ways. As long as an indication is recorded, it will be possible to determine that the corresponding RFID tag has been read.

To determine whether an advertisement has been read by a customer or potential customer, the database is queried for an advertisement ID, such as the ID of the first RFID tag. This is represented by step 505 in Fig. 5. The first RFID tag is not easily rendered unreadable, so under normal circumstances, a recycled or trashed mail item that has the first RFID tag attached to it will be read by a reader in the system. If the "db_READ" field is set to "TRUE" for the first RFID tag, it may be concluded that the particular advertisement has been recycled since the TRUE status means that the first RFID tag has been read by the RFID reader. If the first and second RFID tag are attached to the same sheet of paper, as in Figs. 2 and 3, they will likely also travel together. Accordingly, they will be in the vicinity of the RFID reader at the same time. Thus, if the first RFID tag is read, it may be concluded that the advertisement has been recycled. If the second RFID tag has not been read, it is likely that the second tag has been rendered unreadable, which happens when the advertisement has been browsed. If, on the other hand, the second RFID tag has been read by the reader, it must have been intact, which means that the advertisement has not been browsed. Such information is very important for advertisers, since it allows them to target their advertisements to specific geographical or demographic regions, or even on a person-by-person basis.

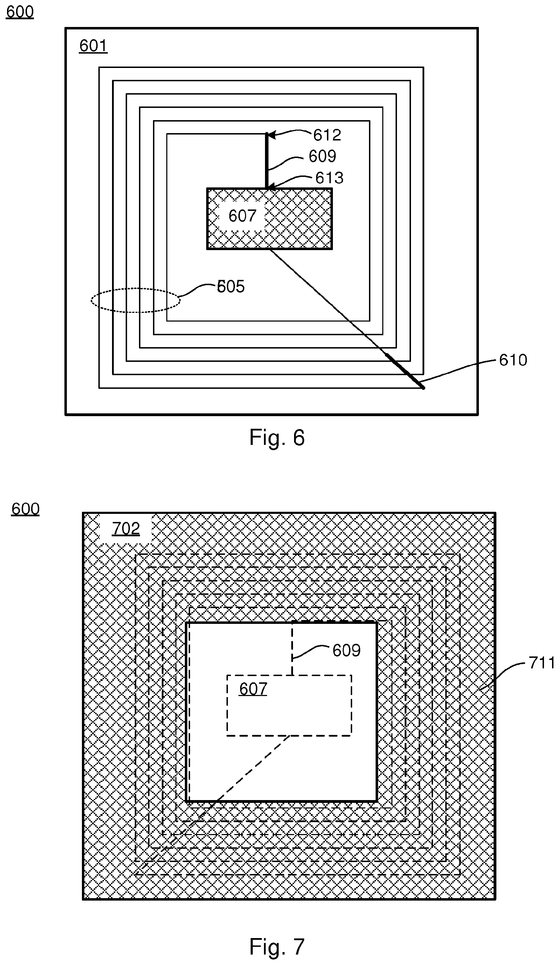

Fig. 6 illustrates a tracking RFID tag 600 suitable for use in the present invention. The RFID tag has an antenna part schematically illustrated by windings 605 and a microchip part 607. The antenna part and the microchip part are connected by a connecting wire 609. The connecting wire 609 is more susceptible to being severed than other parts of the RFID tag.

The microchip in this example, seen from one side 601, has an adhesive surface, illustrated by the hatching of the microchip 607. The adhesive enables the microchip to stick to a surface, such as paper. Element 610 illustrates another connecting wire that is more susceptible to being severed than other parts of the RFID tag.

Fig. 7 illustrates the flip side 702 of the RFID tag also has an adhesive surface 711 that will cause that side to stick to a surface. The hatching of flip side 702 illustrates the adhesive material. The two adhesive sides of the RFID tag 600 enables the RFID tag to hold the right and left pages shown in Fig. 2 together to obtain the trackable item shown in Fig. 3. The weaker parts 609 and 610 are more susceptible to being severed when the RFID tag has been attached at both sides and subsequently subjected to a force that pulls the second part, represented by element 711, comprising the antenna from the first part comprising the microchip 607. This ensures that the antenna is completely detached from the microchip, making it virtually impossible for a reader to communicate with the microchip, including obtaining any useful information from the microchip, such as the tag ID.

The second RFID tag could also be constructed to become unreadable in another way, not by specifically removing the antenna as described above. This is a matter of design.

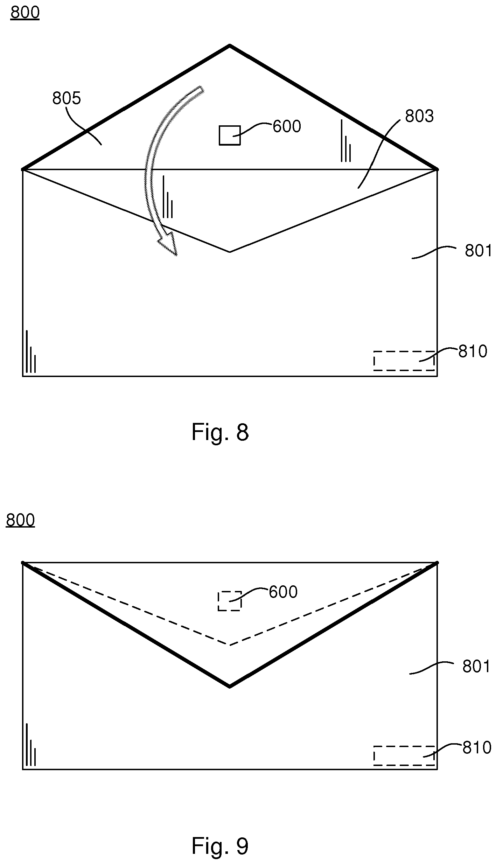

Fig. 8 illustrates the use of the tracking RFID tag in an envelope 800. The envelope has a back part 801 that together with a front part (not shown) forms an inside space 803 for accommodating a letter (not shown). The envelope furthermore has a flap 805, which, in order to close the envelope, is folded onto the back side 801. Adhesive on the flap 805 and/or on the back side 801 ensures that the envelope remains closed.

A tracking RFID tag 600 is attached to the flap 805, for instance via the adhesive surface on flip side 702 illustrated in Fig. 7. The adhesive surface (see Fig. 6) of the microchip 607 is exposed at this point. When the envelope is closed by folding down the flap 805, as illustrated by the arrow in Fig. 8, the microchip adhesive surface will stick to the letter that has been inserted into the envelope inside space 803. The result is shown in Fig. 9.

The envelope or the letter also carries a sturdy first RFID tag 810, which is not easily rendered unreadable and which will indicate whether the envelope (not necessarily the letter) has been recycled.

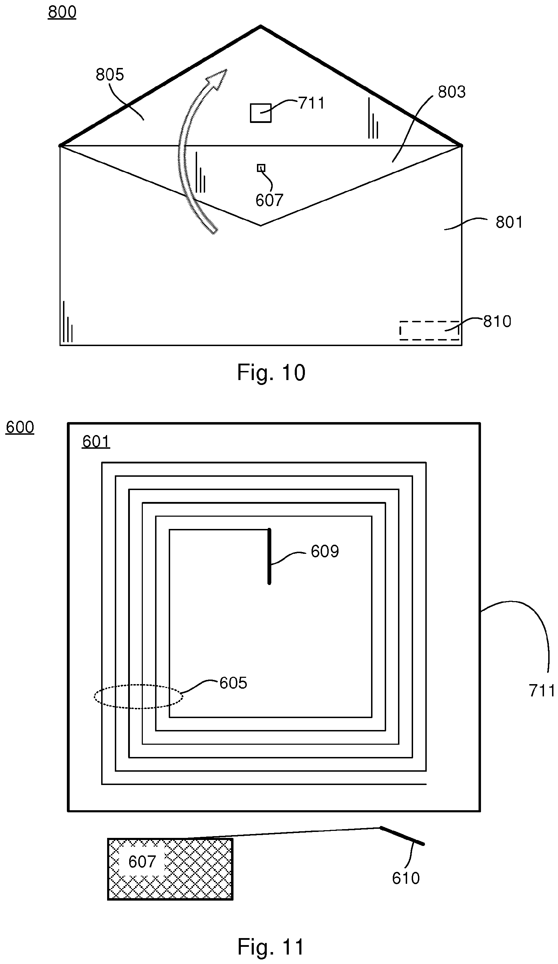

To read the letter, it is necessary to remove the letter from the envelope, for instance by opening the envelope as shown in Fig. 10. If the flap 805 can be pulled from the back side 801, the antenna part of the tracking RFID tag, illustrated using reference number 711 in Fig. 10 (see also Fig. 7), is severed from the microchip part 607, which sticks to the letter inside the envelope. The tracking RFID tag will then no longer be readable since the antenna part 605 (attached to adhesive part 711) is no longer connected to the microchip 607.

If the envelope is opened using a letter opener, the tracking RFID tag will be rendered unreadable when the letter is pulled out of the envelope, because the antenna part 605 is attached to the flap 805 and the microchip part 607 is attached to the letter. To get hands on the letter, the tracking RFID tag is necessarily rendered unreadable. When the envelope is thrown in a recycling bin with an RFID reader, the RFID reader can read the sturdy first RFID tag 810. In accordance with the description above, if the letter has been pulled out, the second RFID tag 600 will not be readable, whereas if the envelope was thrown out before the letter was removed from the envelope, the second RFID tag 600 will also be readable. Thus, if the RFID reader reads both tags, it may be concluded, based on a database query, that the letter was not read (since not opening the letter leaves the second RFID tag intact and thus readable). Vice versa, if only the first RFID tag was read, it may be concluded, or at least suspected, that the letter was read (since the second RFID tag is rendered unreadable when the letter is removed).

Note that such conclusions are only estimates. It is not necessarily possible to determine whether the letter was actually read and understood, or not, nor by whom; only the fact that the second RFID tag was not read can safely be concluded.

Figure 11 shows the unreadable RFID tag in more detail. The connection wires 609 and 610 are broken due to the envelope being opened by opening the flap. The microchip part 607 of the RFID tag remains fixed to the letter inside the envelope, while the antenna part 605/711 (711 is on the flip side) is attached to the flap 805.

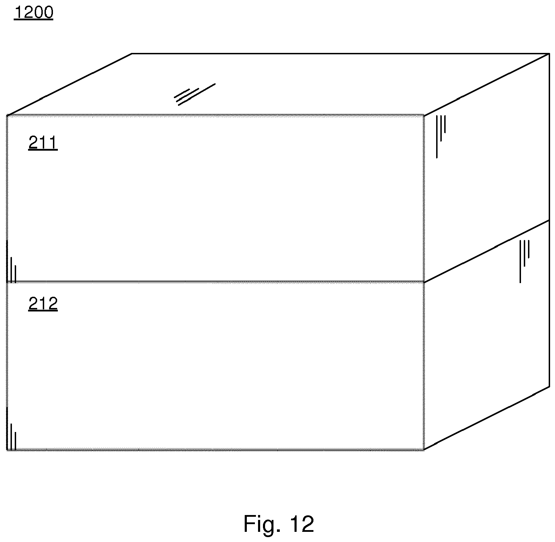

Fig. 12 illustrates an RFID tag 1200 comprising a first electronic tag 211 and a second electronic tag 212 of the kinds described previously. In particular, the second electronic tag has a first tag part (607, see Fig. 6) and a second tag part (711, see Fig. 7) where the first and second tag parts are mechanically attached to one another at least by a first mechanical connection, and the second electronic tag is configured to be rendered unreadable when the first mechanical connection between the first tag part of the second electronic tag and second tag part of the second electronic tag is broken. In some embodiments, a force required to break the mechanical connection in the second electronic tag is less than 1 N. In some embodiments, this force is less than 0.5 N, such as less than 0.1 N, such as less than 0.05 N.

## Claims

1. A trackable item (200) comprising:
- a product (100),
- a first electronic tag (211) attached to the product,
- a second electronic tag (212) having a first tag part (607) attached to a first part of the product or to the first electronic tag and having a second tag part (711) attached to a second part of the product, the first and second tag parts being mechanically attached to one another at least by a first mechanical connection, whereby the first part of the product and the second part of the product are attached to one another, the second electronic tag being configured to be rendered unreadable when the first mechanical connection between the first tag part of the second electronic tag and second tag part of the second electronic tag is broken.

2. A trackable item in accordance with claim 1, wherein a force required to break the mechanical connection in the second electronic tag is less than 1 N.

3. A trackable item in accordance with claim 1 or 2, wherein:
- the first tag part comprises a microchip, and the second tag part comprises an antenna attached to the microchip at least by a first conductor segment (609), the first conductor segment having a first end (612) connected to the antenna and a second end (613) connected to the microchip, the first conductor segment being configured to detach either at the first end or at the second end or in between the first and the second end at a tension in the first conductor segment less than 0.1 N.

4. A trackable item in accordance with one of claims 1-3, wherein the product comprises an envelope, and the second electronic tag is attached to the envelope in such a way that the second electronic tag is rendered unreadable when the envelope is opened or an item inside the envelope is removed from the envelope.

5. A trackable item in accordance with one of claims 1-3, wherein the product includes a document comprising two pages, and the second electronic tag is arranged between the two pages, the first part of the second electronic tag being attached to a first page of the two pages, the second part of the second electronic tag being attached to a second page of the two pages, whereby the two pages are held together.

6. A method for estimating whether a product in a trackable item has been opened, the trackable item comprising a first and a second electronic tag each having a corresponding tag ID, the method comprising:
- reading (501) a plurality of electronic tags using a system of one or more electronic tag readers,
- recording (503) in an electronic tag main database, for each read electronic tag, an indication that said each electronic tag has been read by the system of electronic tag readers,
- determining (505) whether or not both the first and the second electronic tag have been read by the system of electronic tag readers by determining whether or not the electronic tag database comprises indications that the first and the second electronic tag have been read by the system of electronic tag readers.

7. A method in accordance with claim 6, wherein the indication is recorded in the database by storing respective IDs of the read electronic tags.

8. A method in accordance with claim 7, wherein the determining comprises determining whether or not the ID of both the first and the second electronic tag are present in the database.

9. A method in accordance with one of claims 6-8, wherein at least one of the one or more electronic tag readers is attached to a garbage bin or a recycling bin.

10. A method in accordance with one of claims 6-9, wherein at least one of the one or more electronic tag readers is attached to a vehicle, such as a garbage truck.

11. A method in accordance with one of claims 6-10, wherein information about the read electronic tags is transmitted to the database using a wireless communication system.

12. A method for producing a trackable item, comprising:
- providing a product (100),
- attaching the first electronic tag (211) to the product,
- attaching a second electronic tag (212) to the product by attaching a first tag part of the second electronic tag to a first part of the product and attaching a second tag part of the second electronic tag to a second part of the product.

13. A method in accordance with claim 12, wherein the trackable item comprises a folded product, and the first tag part is attached to a first part of the folded product and the second tag part is attached to a second part of the folded product such that at least a part of an information contained in the folded product is not visible unless the first and second part of the second electronic tag are separated.

14. A method in accordance with claim 12 or 13, wherein the trackable item includes a leaflet comprising two pages, and the second electronic tag is arranged between the two pages and is attached to each of the two pages, whereby the two pages are held together, and the second electronic tag is configured to be rendered unreadable when the two pages are separated at the second electronic tag.

15. A method in accordance with one of claims 12-13, wherein the trackable item comprises an envelope, and the second electronic tag is attached to the envelope in such a way that the second electronic tag is rendered unreadable when the envelope is opened or an item inside the envelope is removed from the envelope.

16. A method in accordance with one of claims 12-15, wherein information about read electronic tags is stored in a database on a garbage truck, and data in the database on the garbage truck is subsequently transferred to the main database.

17. An RFID tag (1200) comprising:
- a first electronic tag (211),
- a second electronic tag (212) having a first tag part (607) and a second tag part (711), the first and second tag parts being mechanically attached to one another at least by a first mechanical connection, the second electronic tag being configured to be rendered unreadable when the first mechanical connection between the first tag part of the second electronic tag and second tag part of the second electronic tag is broken, wherein a force required to break the mechanical connection in the second electronic tag is less than 1 N.

18. An RFID tag in accordance with claim 17, where the first and second electronic tags are rigidly attached to one another, such as by monolithic integration.
